# EUROPEAN PATENT APPLICATION

(11) **EP 2 309 359 A2**
(43) Date of publication of application: **13.04.2011**
(21) Application number: 10186471.8
(22) Date of filing: 04.10.2010
(51) Int. Cl.: G05B 23/02

(54) **System and method for analyzing reporting data**

(30) Priority: 07.10.2009 US 575242
(71) Applicant: General Electric Company, Schenectady, NY 12345 (US)
(72) Inventor: Woste, Clemens, 48477 Horstel (DE)
(74) Representative: Bedford, Grant Richard

(57) **Abstract**

Various embodiments of the invention include systems and methods for analyzing reporting data. According to one embodiment a system 100 for analyzing reporting data is provided. The system can include at least one communication interface 435, at least one memory 405 operable to store instructions 415, and at least one processor 410 in communication with the communication interface 435 and the memory 405. The processor 410 can execute the instructions 415 to: extract 205 historical data associated with the operation of at least one machine 108; generate 215 an output of an analytical report based on the historical data 106; automatically identify 225 an indication of at least one machine status by processing 220 the output of the analytical report with respect to at least one trigger condition associated with the indication of the machine status; and generate 230 an alarm in response to automatically identifying the indication of the machine status.

## Description

Various embodiments of the invention relate generally to data analysis, and more specifically relate to systems and methods for analyzing reporting data.

Wind turbine generators with ratings of 1.5 MW or more are now available. Many power generation developers are installing wind farms having one hundred or more wind turbine generators. The "block" of power available from wind farms with 1.5 MW wind turbine generators can be comparable to a modem gas turbine generator. Accordingly, wind turbine generators are increasingly becoming feasible sources of power for the power grid. Maintenance costs and power generation efficiency can be improved by accurate, timely, and effective reporting of turbine operation.

Accordingly, a need to improve turbine and other system reporting and monitoring exists. There further exists a need for system and methods that analyze reporting data.

Various embodiments of the invention can address some or all of the needs addressed above. According to one embodiment, there is provided a method for analyzing reporting data. The method can include: receiving data associated with the operation of at least one machine; storing the data as historical data; defining at least one analytical report for identifying at least one machine status of the machine; and generating an output of the at analytical report based on the historical data. The method can further include defining at least one trigger condition for identifying an indication of the machine status in the output of the analytical report; and automatically processing the output of the analytical report with respect to the trigger condition. The method may also include automatically identifying the indication of the machine status based at least in part on automatically processing the output of the analytical report with respect to the trigger condition; and performing at least one resulting action in response to automatically identifying the indication of the machine status.

According to another embodiment, there is provided a system for analyzing reporting data. The system can include at least one communication interface; at least one memory operable to store instructions; and at least one processor in communication with the communication interface and the memory. The processor can be operable to execute the instructions to: receive data associated with the operation of at least one machine via the communication interface; store the data as historical data in the memory; define at least one analytical report for identifying at least one machine status of the machine ; generate an output of the analytical report based on the historical data; and define at least one trigger condition for identifying an indication of the machine status in the output of the analytical report. The processor can further be operable to execute the instructions to: automatically process the output of the analytical report with respect to the trigger condition; automatically identify the indication of the machine status based at least in part on automatically processing the output of the analytical report with respect to the trigger condition; and perform at least one resulting action in response to automatically identifying the indication of the machine status.

According to yet another embodiment, there is provided a system for analyzing reporting data. The system can include: at least one communication interface; at least one memory operable to store instructions; and at least one processor in communication with the communication interface and the memory. The processor can be operable to execute the instructions to: extract historical data associated with the operation of at least one machine; generate an output of an analytical report based on the historical data; automatically identify an indication of at least one machine status by processing the output of the analytical report with respect to at least one trigger condition associated with the indication of the machine status; and generate an alarm in response to automatically identifying the indication of the machine status.

Other embodiments, aspects, and features will become apparent to those skilled in the art from the following detailed description, the accompanying drawings, and the appended claims.

Reference will now be made to the accompanying drawings, which are not necessarily drawn to scale, and wherein:
FIG. 1 is a block diagram of an example power generation system, according to an embodiment of the invention.
FIG. 2 is a flowchart illustrating an example method, according to an embodiment of the invention.
FIG. 3 is a flowchart illustrating an example method, according to an embodiment of the invention.
FIG. 4 is a block diagram illustrating an example controller, according to an embodiment of the invention.

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems and methods for analyzing reporting data, which may be performed in association with machine operation reports, such as with turbine operation reports or in other plant reporting environments. Turbine operation is described in detail herein as an example operating environment within which various embodiments described herein can be applied. However, it is appreciated that these embodiments can be applied to any other machine or system that generate data for analysis, which may include, but is not limited to: at least one wind turbine; at least one wind turbine farm; at least one fleet of wind turbines; a plurality of wind turbines associated with at least one area; at least one hydroelectric turbine; at least one generator; at least one motor; or at least one solar panel. Accordingly, a turbine is described herein as an example application only, and the features of these various embodiments can be applied to any machine, plant, or other system.

According to various embodiments, methods and systems are provided that can automatically analyze reporting data by automatically processing reporting data, or a report output, to identify whether or not a condition exists. The condition may indicate a turbine operating status to be monitored. Upon automatically identifying the presence of a condition in the reporting data, a resulting action can be performed, such as an alarm to an individual, a control action to a turbine controller, storing data in memory, and/or generating additional reports or monitoring events. It is appreciated that any number and or any type of reports serving any purpose can be analyzed according to various embodiments described herein. Moreover, it is further appreciated that the conditions for which the reporting data are analyzed can vary, depending upon the turbine status or other operation or performance factors to be identified, and that the automatic analysis of the reporting data can be customized and/or altered over time, based on the needs existing at the time.

Previously, reporting data, whether run or gathered automatically, had to be reviewed manually. Even though the majority of interest is in an abnormal operation of the turbine or indications that may indicate or predict poor operation or component failure, manual review requires each report to be reviewed, resulting in an overwhelming amount of unnecessary review time to detect the few instances of interest. The number of satisfactory results, which would not cause any alarm or indicate any suspect condition, far outweighs the number of undesired results that would necessitate follow-up by the reviewer. Therefore, the systems and methods described herein permit the automatic review of reporting data, which will minimize the amount of effort and involvement required by a human operator (if at all) by generating an alarm or other resulting action only when a suspect condition is identified in the reports. Effectively, only those reports that have data of interest would be reviewed or otherwise acted upon manually, and those reports that do not indicate any suspect condition can effectively be ignored.

As compared to real-time monitoring, such as condition based monitoring (CBM) or component monitoring, analyzing reports based on historical data provides an ability to perform more complex analysis, having historical data available, such as, but not limited to, analyzing trends, performing statistical analysis, adjusting condition triggers or other indications based on historical trends or other changes in turbine operation, etc. In contrast, real-time monitoring typically involves monitoring signals as they are measured from, or otherwise associated with, turbine components based on thresholds or other algorithms. Real-time monitoring, thus, can indicate when a threshold or other algorithm is exceed or not satisfied at any given time, but in many circumstances cannot provide the more insightful analyses capable when analyzing historical reporting data.

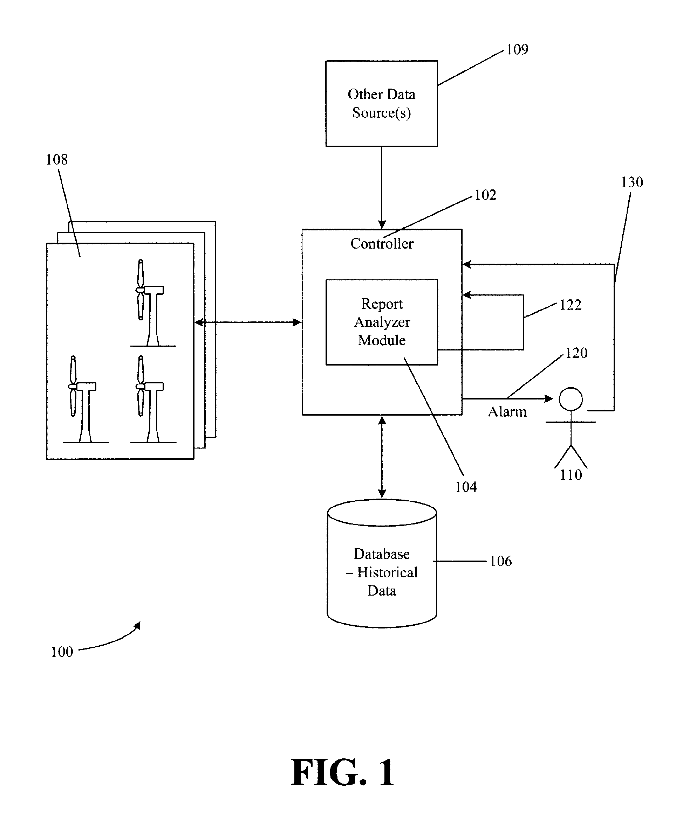

FIG. 1 is a block diagram of an example power generation system 100, which may be operable for analyzing reporting data, according to one embodiment of the invention. It is appreciated that the system illustrated in FIG. 1 is only one of many possible embodiments, as will become apparent in light of the descriptions provided herein.

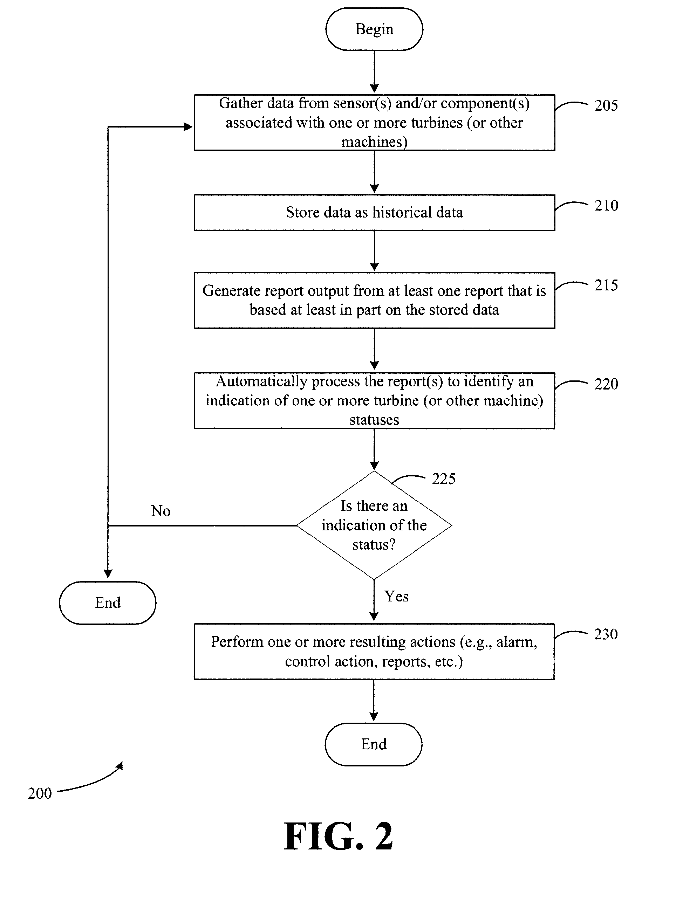

With reference to FIG. 1, the system 100 can include at least one controller 102, which may be in communication with one or more turbines 108 (or other machines) and/or one or more other data sources 109. In addition, the controller 102 may include one or more programming logic components, such as, but not limited to, a report analyzer module 104, that contain programming to implement at least some of the operations described herein and illustrated, for example, by FIGS. 2-3. The controller 102 may also include, or otherwise be in communication with, one or more databases 106 or other data storage devices, which may be operable to store historical data.

The one or more turbines 108 may be one or more wind farms having multiple wind turbines operable to supply electrical power to a utility, according to one embodiment. It is appreciated, however, that the one or more turbines 108 may instead represent a single turbine, a fleet of multiple turbines and/or wind farms, or one or more geographically defined areas containing multiple turbines, such that the controller 102 can receive data and analyze reports at the turbine level, the farm level, the fleet level, and/or the area level. Moreover, it is appreciated that, while the example embodiments described herein generally refer to wind turbines, any other turbines or other equipment may be provided instead of wind turbines, such that reports for any other turbines or equipment can be analyzed in the same or similar manners as described herein by example.

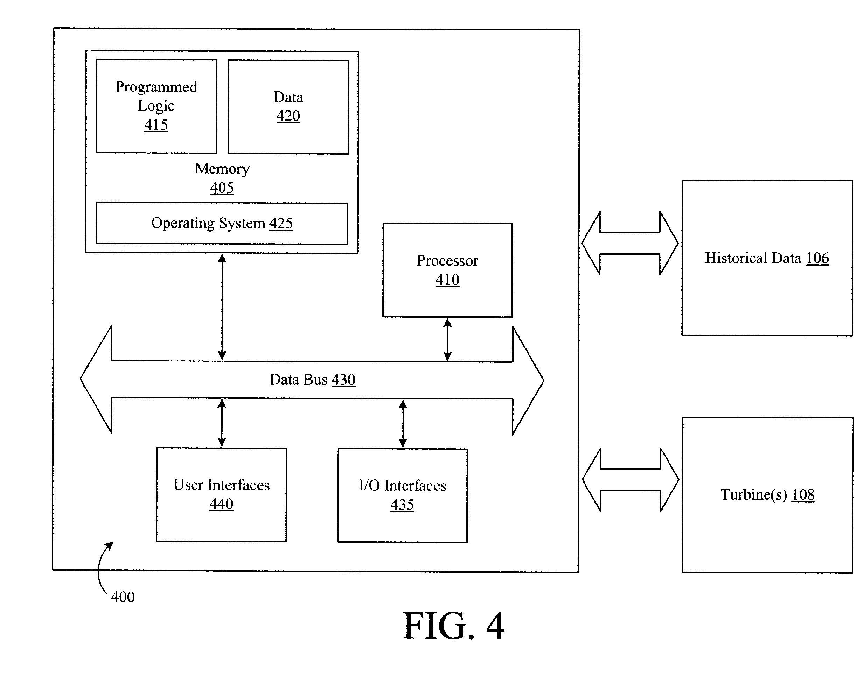

According to one embodiment, the controller 102 can be operable to monitor and/or receive measured and/or modeled signals relating to turbine 108 operation. The controller 102 can be in electrical communication with one or more sensors or other monitoring devices associated with the respective turbines 108, and can receive data signals representing measured conditions of the turbines 108. For example, according to one embodiment, the controller 102 may include supervisory command and data acquisition (SCADA) architecture together with databases 106 (local and/or distributed) to provide functionality for monitoring and control, as well as user visualization, historical data archiving and reporting, configuration management, secondary data processing, fault logging, alarming, and/or remote user access. The controller 102, and/or another controller (not pictured), may also be operable to facilitate control of the turbines 108, as is known. It is appreciated that as used herein, the controller 102 may, but is not required to, facilitate control of the turbines 108, and that the term "controller" is used herein to generally refer to the system component or components operable to process reporting data according to the methods described herein, such as with reference to FIGS. 2-3. An example controller 102 is described in more detail with reference to FIG. 4.

The controller 102 may also include a report analyzer module 104, which may include software, hardware, or any combination thereof, with computer-executable instructions operable for performing various operations described with reference to the example flowcharts of FIGS. 2-3. For example, the report analyzer module 104 can include programming instructions to automatically analyze reporting data by automatically processing reporting data, or a report output, to identify whether or not a condition exists that may indicate a given turbine operating status. The report analyzer module 104 may further include programming instructions to automatically perform a resulting action, such as an alarm 120 or a control action 122 to facilitate turbine 108 operation, upon identifying the presence of the given condition in the reporting data. The report analyzer module 104 may access one or more databases 106 that store historical reporting data. In one embodiment, the database 106 is configured as a logical component within memory of the controller 102. Though, in other embodiments, the database 106 may be remotely located, such that the controller 102 is in electrical communication with the database. It is appreciated that, according to one embodiment, the report analyzer module 106, or other programming instructions implemented in the controller 102, can also be operable to store data gathered from the turbines 108 as historical data, and to configure, store, and run analytical reports on the historical data.

The controller 102 and associated report analyzer module 106 may further include one or more user interface means, such that a system operator 110 can interface with the controller 102. For example, a system operator 110 may interface with the controller 102 to define and/or alter report configurations, to define and/or adjust trigger conditions that may give an indication of a given turbine status in reporting data, to review report output, and to receive and analyze alarms 120 or other actions resulting from analyzing reporting data. Moreover, a system operator 110 may interface with the controller to facilitate turbine 108 operation.

In one embodiment, the controller 102 may also be in communication with other data sources 109 that are operable to provide data to the controller 102 for analysis and reporting, and/or to facilitate control of turbine 108 operation. In one embodiment, an additional data source 109 may include a meteorological service, operable to provide meteorological data to the controller 102. It is appreciated, however, that any other data source 109 may also be included, according to various embodiments.

The example power generation system 100 illustrated in FIG. 1 is provided for illustrative purposes only, and may be configured in number of ways. For example, although a single controller 102 is shown, according to other embodiments, there may be multiple controllers 102 and databases 106, each operable to separately perform automatic report processing and analysis. According to one embodiment, each turbine 108 may be associated with a local controller 102 and database 106, such that report processing and analysis can be performed locally specific to that turbine 108. In another embodiment, instead of a local controller 102, or in addition to, there may be one or more centralized controllers in communication with multiple turbines 108. For example, a controller and associated database may receive data from multiple turbines 108 and perform report processing and analysis at the centralized level for the multiple turbines 108. The centralized controllers and databases may be farm level controllers in communication with an entire wind farm, fleet level controllers in communication with an organization's entire fleet of turbines 108 (or a portion thereof), area level controllers in communication with all turbines within a given area, or any variation thereof. Moreover, in embodiments in which there may be multiple controllers and/or databases, the controllers may perform parallel processing, such as may be useful for efficiency and to provide system redundancy, or the processing tasks may be distributed between the controllers.

FIG. 2 is a flowchart illustrating an example method 200 for performing reporting data analysis, according to an embodiment of the invention.

The method 200 can begin at block 205, in which data is gathered for storage and subsequent reporting analysis. The data may be gathered from turbine sensors or other turbine components, and/or from other data sources. According to one embodiment, the data can be transmitted electronically in real-time or near real-time for storage in a database, such as the database 106. According to another embodiment, the data can be transmitted electronically in a batch mode or other asynchronous processing, such as if turbine data is collected and stored locally (e.g., at a local turbine database or at a farm database) and subsequently synchronized with a database associated with the controller, similar to database 106. According to yet another embodiment, as described above, the data may be gathered locally and analyzed locally, such as by a local controller similar to 102 and database similar to 106.

As used herein, the data gathered at block may be any data associated with turbine operations and/or surrounding conditions, for which analytical reports may be run to indicate turbine performance or conditions. Example data includes, but is not limited to, real power production; reactive power production; wind speed; energy subtotal; total energy gathered; generator rotational speed; generator temperature; gearbox temperature; ambient temperature; wind direction; power factor phase voltage and phase current for each phase; production time; vertical wind speed; horizontal wind speed; wind direction; wind temperature; air pressure; data quality indication; data coverage indication; turbine state indication; turbine component state indication; fault; or user action. It is appreciated, however, that any other data may be gathered at block 205, and that the data gathered may vary and may be configurable by an operator.

According to one embodiment, data may be captured at predefined intervals, such that what is gathered is effectively a sample of the turbine operating conditions at predefined intervals. The predefined intervals may vary, such that the shorter the interval, the more comprehensive the data capture is, but the larger the quantity of data becomes. Thus, if the predefined intervals are greater, then the quantity of data can be reduced. It is appreciated that, according to one embodiment, the interval of data capture can vary, and may be adjustable by an operator. Moreover, the data capture requirements may also differ for each analytical report being run. At block 210 the data gathered at block 205 is stored in one or more databases.

Following block 210 is block 215, in which the controller may execute one or more reports on the historical data to generate report output for each report. The reports may be executed at any time and may be representative of historical data over any period of time. According to one example embodiment, the reports may be scheduled for periodic execution at predetermined times (e.g., daily at one hour after midnight local time, etc.), such as at times that minimize the system impact that may result from increased processing overhead associated with executing the reports. According to another embodiment, however, the reports may be event-driven, such that they are executed upon the occurrence of a predetermined event (e.g., turbine shut-down or start-up, turbine cycling, or any other turbine operating condition or other event). For example, turbine systems that perform condition based monitoring (CBM) may use various output of the CBM to initiate execution of related reports. This may be useful to execute reports only upon the identification of a predetermined event. However, event-driven report execution may be somewhat unpredictable and managing the associated processing overhead may require additional system planning. It is also appreciated that reports can be defined on and initially executed by a first system (e.g., a turbine reporting system) and transmitted to a second system including the controller 102 and the report analyzer module 104. As such, the data gathering and report execution operations at blocks 205 and 210 may optionally be performed on a different system than that which performs the subsequent operations described below.

The controller 102 can execute any number and/or any type of reports that may facilitate turbine monitoring and analysis. Example reports include, but are not limited to, power curve reports; data coverage reports; fault reports; data quality reports; counter quality reports; or parameter reports.

A power curve report indicates the amount of power a wind turbine can produce at a given wind speed. A condition may be identified if the power at a given speed is outside of an expected range.

A data coverage report may indicate how many samples have been collected over a set time period, to determine if the expected number of samples has been collected by the system (e.g., based on a given sampling rate, the expected number of samples over a period of time would be the period of time divided by the sample rate). For example, if 10 minute samples are gathered by the system, then 144 samples are expected in a 24 hour period. If a threshold (e.g., 137 or 95%) is not satisfied, then a data quality condition may be indicated.

A fault report may indicate any fault or predefined faults when occurred. The report may include a Pareto chart or Pareto diagram and/or a list of specific faults identified associated with a specific turbine, turbine component, time, etc. A condition may be identified if a threshold minimum number of faults over a predefined time occurs.

A data quality report can indicate when sensors or other turbine components may have a defect because the data generated by the component may be an unexpected value. For example, certain sensors may be expected to report data within a certain range (e.g., temperature sensors between -50°C and 60°C), and data returned outside of the expected range may generate a fault or condition to indicate a potential data quality issue.

It is appreciated, however, that any other report may be executed at block 215 to generate report output for subsequent processing by the report analyzer module 104.

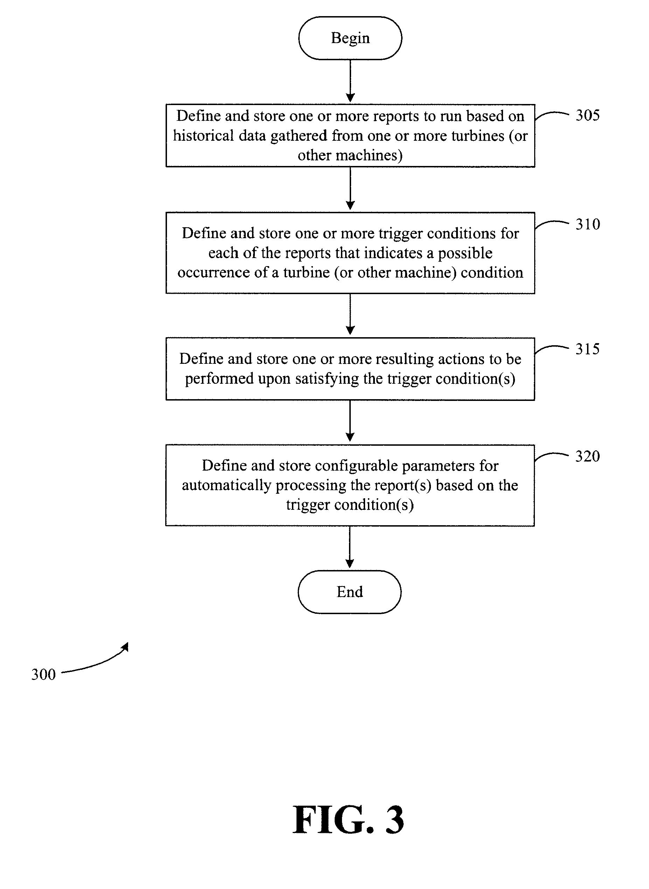

Following block 215 is block 220, in which the report analyzer module 104 (or any other programming instructions) automatically processes the report output generated at block 215 to determine whether any suspect conditions (also referred to herein as a "trigger condition") are indicated by the report output. As described in more detail with reference to FIG. 3, trigger conditions and associated parameters may be defined for each report to indicate the possible existence of a turbine condition or other turbine status that is being monitored. Thus, each report may have one or more different trigger conditions and associated parameters (though, some may be applicable to multiple reports), depending upon the report and the underlying data types and the turbine status is being monitored.

A trigger condition may be any value, parameter, or other data that can be represented by a report output or otherwise discernable from the report output. Thus, a trigger condition may have multiple parameters, algorithms, thresholds, statistical models, mathematical operations, and the like, which are used to process report output. As one example, upon generating a report output at block 215, the report analyzer module 104 may apply the trigger conditions to the report output to determine whether one or more parameters exist or whether one or more thresholds are met or otherwise violated. As another example, the report analyzer module 104 may apply the trigger conditions to the report output by performing additional data processing on the report output data, such as applying algorithms, performing statistical or mathematical operations, or any other operation identified by the trigger condition, to determine whether the report data indicates the turbine condition or status for which the trigger condition is defined to facilitate identifying.

According to one embodiment, the report output from block 215 can be monitored at block 220 either simultaneous to its generation or at some point after executing the underlying report and generating the output. For example, as part of generating the report output, the report analyzer module 104 may process the output with respect to the trigger conditions to identify an indication of a turbine status in the report output. Though, in another embodiment, the report analyzer module 104 may process the report output after the report has been generated, whereby the report analyzer module 104 retrieves the report output (which may be in underlying data, processed data, and/or a graphical representation of the underlying data) that has been previously stored after generation at block 215, and performs the subsequent processing with respect to the trigger condition. Much like executing the reports, the report processing with respect to the trigger conditions at block 220 can be scheduled for periodic execution at predetermined times and/or can be event-driven.

As described, the trigger conditions will vary, depending upon the report type being processed and the turbine status being monitored. Example trigger conditions include, but are not limited to, threshold values for data coverage (i.e., samples collected over a given period of time); predefined faults; data outside of expected ranges or above/below predefined thresholds; counter resets; variables (e.g., power, rotor speed, wind speed, temperatures, etc.) outside of expected ranges or above/below predefined thresholds; or unexpected parameter settings (e.g., outside of expected ranges or above/below predefined thresholds). It is appreciated, however, that any other trigger conditions may be defined and applied when processing report output at block 220, and that the trigger conditions and/or report output processing may be configurable by an operator.

Following block 220 is decision block 225, in which it is determined whether a given turbine status is indicated by the results of processing the report output with respect to the trigger condition(s) at block 220. If the processing indicates that the turbine status does not exist (i.e., there are no reporting anomalies), then processing may end. Alternatively, according to one embodiment, processing may continue to block 205, illustrating that the cycle can be repeated upon the collection of new data and execution of new reports based on the new data.

However, if the processing indicates a certain turbine status may exist, then block 230 follows, in which one or more resulting actions are performed upon identifying the possibility of a monitored status. A resulting action may be any action desired to be performed, which may vary depending upon the turbine status indicated, when the report was executed, the turbine with which the status is associated, etc. Example resulting actions include, but are not limited to, an alarm (e.g., audible, displayed, transmitted, logged, etc.); a control action to a turbine control system (e.g., to alter control of one or more turbines based on the status identified, etc.); storing data associated with the status indicated (e.g., storing into a log in memory or in a database, etc.); or generating at least one additional report or perform additional monitoring based at least in part on the status indicated (e.g., indication of one turbine status may suggest performing additional monitoring of involved turbine components or conditions, or perform additional analysis of related turbine data).

For example, according to one embodiment, an alarm may be generated and transmitted to a system operator. Upon receiving the alarm, the operator may then react accordingly. Because an alarm is generated based on the automatic processing of existing report output, an operator may then choose to manually review the corresponding report output (which may also be transmitted to the operator) to determine if an issue does in fact exist or if additional investigation is necessary. Thus, there is benefit in generating report output, automatically processing that report output to identify if a potential issue exists, then permitting manual review of the underlying report output.

In another example, according to one embodiment, the controller may cause the execution of additional turbine monitoring or measurement upon the indication of a given turbine status in the processed report output. For example, upon identifying a given turbine status, specific CBM may be initiated. Additional monitoring may be used to further identify whether an issue actually exists, further pinpoint the problem, or determine the severity of the issue.

After block 230, or block 225, the method 200 may end, having automatically processed report output based on predetermined trigger conditions to determine whether one or more turbine status being monitored may exist.

FIG. 3 is a flowchart illustrating an example method 300 for setting up and defining reporting and subsequent processing parameters, according to an embodiment of the invention. Specifically, the features described with reference to FIG. 3 are provided as an illustrative embodiment of defining reports, defining trigger conditions for processing report output, setting resulting actions when a trigger condition is satisfied, and defining associated parameters which may be configurable. Each of these items may be defined by an operator, via a user interface for the controller 102 or via any other system. For example, the controller 102 may have a report/condition maintenance interface whereby an operator can generate reports or trigger conditions, customize or configure the same, or define execution schedules for automated or manual execution.

The method 300 can begin at block 305, in which one or more reports are defined and stored in association with the controller 102. As previously described, any number of reports may be defined for use in representing any number of turbine operation behavior. Reports may be created using third party reporting tools and/or may be customized reports specifically defined for a given system or task. According to one embodiment, the reports can be stored in one or more databases associated with the controller 102, or with any other system component. It is appreciated that the reports are not required to be defined on, stored by, and/or executed by the same system that operates the report analyzer module 104, as described in more detail with reference to FIG. 2. For example, according to one embodiment, reports can be defined on and initially executed on a first system (e.g., a turbine reporting system) and transmitted to a second system including the controller 102 and the report analyzer module 104.

Following block 305 is block 310, in which trigger conditions may be defined and stored in a database, such as the database 106 associated with, or otherwise accessible by, the controller 102. As previously described, the trigger conditions will likely vary by report and/or by the turbine status to be detected. Each report may have any number of trigger conditions defined and associated therewith for subsequent processing. Moreover, one trigger condition may be defined and associated with any number of reports, such as may be the case if the data analyzed by the trigger conditions are present or can be obtained via multiple reports. As previously described, trigger conditions may be defined to include any value, parameter, or other data that can be represented by a report output or otherwise discernable from the report output, such as, but not limited to, data values, parameters, algorithms, thresholds, statistical models, mathematical operations, and the like, which are used to process report output. Upon defining the trigger conditions, they may be associated with the respective report and stored in a database for subsequent retrieval by the report analyzer module 104.

Following block 310 is block 315, in which one or more resulting actions are defined and stored in association with each triggered condition. Each triggered condition may be configured to invoke the same or different resulting actions, which may likely depend upon the turbine status that the triggered condition is defined to identify. In addition to defining the type or types of resulting actions to perform, parameters, data, or other information can also be defined for the trigger condition. For example, if an alarm is defined as associated with one trigger condition, the alarm type, content, and associated data or other action can be defined for the alarm resulting action. In one example, the resulting action may be defined to cause the report analyzer module 104 to extract additional information during processing for inclusion with the alarm, so as to provide more details to an operator as to the potential problem or other turbine status indicated. Similarly, if a control action causing a turbine adjustment is to be performed, the specific parameters of the turbine adjustment can also be defined. As another example, if additional monitoring or analysis is to be performed, the resulting action may include data used to invoke the additional monitoring (e.g., which type of CBM and associated parameters) or execute the additional analysis (e.g., which reports, what data, etc.). Moreover, as previously described, multiple resulting actions may be performed, and thus the timing and/or sequence of performing the multiple actions may also be defined at block 315.

Finally, following block 315 is block 320, in which any other configurable parameters for executing the reports and/or for performing the automatic processing of report output data can be defined and stored. Various configurable parameters can include, but are not limited to, report execution schedule, automatic report processing schedule, data gathering parameters (e.g., sample rate, data elements, etc.), which turbines/farms/fleets/areas, resulting actions, alarm recipients, and the like. It is appreciated that any aspect of reporting and/or automatic report output processing can be configurable by an operator. Thus, upon storing the configuration parameters, an operator can access and alter the parameters prior or during report execution or subsequent report output processing, such as via a user interface of the controller 102 or any other system.

The method 300 may end after block 320, having defined reports, trigger conditions, resulting actions, and any associated parameters that can be configurable by a user.

The following example, using one example report and associated trigger condition, is illustrative of an example for carrying out the methods described herein. In this example, a report may be a data quality report, which indicates the number of data samples gathered and stored in data over a predetermined period of time. Thus, the report may be relied upon to indicate whether the data gathering techniques are performing as expected, or whether data is missing, and thus may be discounted as less reliable. As a simplistic example, assume that data is gathered from a single turbine, and averaged together every ten minutes, storing ten minute averages in a historical database. Thus, perfect data collection would expect 144 entries in the historical database. A trigger condition may be defined to indicate that anything below a predefined threshold (e.g., 137 entries = 95%) would generate an alarm to an operator that indicates a potential data quality issue. Thus, in operation, every twenty-four hours, the data quality report is run to provide the number of data entries over the last twenty-four hours. The report output may simply provide a count of the number of data entries, or may provide a graph of the entry and associated storage time. Either while executing the report, or after the report output is generated, the report analyzer module 104 can process the report output data against the defined trigger condition. If the predefined threshold is not satisfied (e.g., less than 137 entries), then an alarm can be generated to an operator that informs the operator of the potential data quality issue. In one example, the report output (e.g., the graph indicating where missing entries may have occurred) can also be transmitted to the operator for the operator's manual analysis. In another example, the alarm may include more detailed information regarding the potential failure (e.g., include times of day missing data, etc.).

It is appreciated that the aforementioned examples are provided for illustrative purposes only, and that any number of reports and trigger conditions can analyzed according to the methods described herein.

Accordingly, by performing automatic processing of report output data, these systems and methods have the technical effect of greatly reducing the amount of manual effort required to monitor turbine operating status. Without these systems and methods, all report output data would have to be manually monitored, the overwhelming majority of which will likely not indicate any problem. Thus, a human operator may be not be as attentive, due to the unlikely possibility of an error, and miss a critical status change. A further technical effect of automatically processing report output and generating an alarm or any other resulting action enables manual intervention or other system changes only when problems are identified as a result of processing the report output against the trigger conditions. Thus, as a result of these systems and methods, more effective, efficient, and safer turbine monitoring is provided.

FIG. 4 illustrates a block diagram an example controller 400, which may be used to at least partially carry out one or more of the methods described herein. More specifically, one or more controllers 400 may carry out the execution of the report processing methods described herein. Each controller 400 may include a memory 405 that stores programmed logic 415, for example the report analyzer module 104 and associated functions described above with reference to FIGS. 1-3, and may store data 420, such as reporting data, trigger conditions, resulting actions, turbine data, configurable parameters, and the like. In addition to the data 420, the controller may also be in communication with an internal or external database, such as the database 106 described with reference to FIG. 1. The memory 405 also may include an operating system 425. A processor 410 may utilize the operating system 425 to execute the programmed logic 415, and in doing so, also may utilize the data 420. A data bus 430 may provide communication between the memory 405 and the processor 410. Users may interface with the controller 400 via a user interface device(s) 440 such as a keyboard, mouse, control panel, or any other devices capable of communicating data to and from the controller 400. The controller 400 may be in communication with one or more databases 106 and/or one or turbines 108, such as a single turbine, a wind farm, a fleet, or multiple turbines within an area, via an input/output (I/O) interface 435. Though not shown, the controller 400 can comprise multiple controllers and/or can communicate with other memories and/or controllers for accessing distributed data and/or distributing processing and/or providing redundant processing.

The application references block diagrams of systems, methods, apparatuses, and computer program products according to at least one embodiment described herein. It will be understood that at least some of the blocks of the block diagrams, and combinations of blocks in the block diagrams, respectively, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed in detail in the descriptions below.

These computer program instructions may also be stored in a computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based, or programmable consumer electronics, mini-computers, mainframe computers, etc.

Application programs that are components of the systems and methods described herein may include routines, programs, components, data structures, etc. that implement certain abstract data types and perform certain tasks or actions. In a distributed computing environment, the application program (in whole or in part) may be located in local memory, or in other storage. In addition, or in the alternative, the application program (in whole or in part) may be located in remote memory or in storage to allow for circumstances where tasks are performed by remote processing devices linked through a communications network.

Many modifications and other embodiments of the exemplary descriptions set forth herein to which these descriptions pertain will come to mind having the benefit of the teachings presented in the foregoing descriptions and the associated drawings. Thus, it will be appreciated the invention may be embodied in many forms and should not be limited to the exemplary embodiments described above. Therefore, it is to be understood that the invention is not to be limited to the specific embodiments disclosed and that the modification and other embodiments are intended to be included within the scope of the appended claims. Although specific terms are employed herein, they are used in a generic and descriptive sense only and not for purposes of limitation.

Various aspects and embodiments of the present invention are defined by the following numbered clauses:
1. A method for analyzing reporting data, comprising:
   receiving data associated with the operation of at least one machine;
   storing the data as historical data;
   defining at least one analytical report for identifying at least one machine status of the at least one machine;
   generating an output of the at least one analytical report based on the historical data;
   defining at least one trigger condition for identifying an indication of the at least one machine status in the output of the at least one analytical report;
   automatically processing the output of the at least one analytical report with respect to the at least one trigger condition;
   automatically identifying the indication of the at least one machine status based at least in part on automatically processing the output of the at least one analytical report with respect to the at least one trigger condition; and
   performing at least one resulting action in response to automatically identifying the indication of the at least one machine status.
2. The method of clause 1, wherein the at least one resulting action comprises an alarm, and further comprising transmitting the alarm to one of: an operator; or a controller associated with the at least one machine.
3. The method of any preceding clause, wherein the at least one resulting action comprises at least one of: an alarm; a control action to a controller associated with the at least one machine; storing data associated with the at least one machine status; or generating at least one additional report based at least in part on the indication of the at least one machine status.
4. The method of any preceding clause, wherein the at least one machine comprises one of: at least one wind turbine; at least one wind turbine farm; at least one fleet of wind turbines; a plurality of wind turbines associated with at least one area; at least one hydroelectric turbine; at least one generator; at least one motor; or at least one solar panel.
5. The method of any preceding clause, wherein receiving data associated with operation of at least one machine comprises receiving at least one of: real power production; reactive power production; wind speed; energy subtotal; total energy gathered; generator rotational speed; generator temperature; gearbox temperature; ambient temperature; wind direction; power factor phase voltage and phase current for each phase; production time; vertical wind speed; horizontal wind speed; wind direction; wind temperature; air pressure; a data quality indication; a data coverage indication; a turbine state indication; a turbine component state indication; a fault; or a user action.
6. The method of any preceding clause, defining at least one analytical report comprises defining at least one of: a power curve report; a data coverage report; a fault report; a data quality report; a counter quality report; or a parameter report.
7. The method of any preceding clause, the at least one trigger condition comprises at least one of: a data coverage threshold violation; a fault; a data range violation; a counter reset; a variable range violation; a variable threshold violation; or an unexpected parameter setting.
8. The method of any preceding clause, wherein automatically processing the at least one analytical report, automatically identifying the indication of the at least one machine status, and performing the at least one resulting action are performed periodically at predetermined times.
9. The method of any preceding clause, wherein automatically processing the output of the at least one analytical report, automatically identifying the indication of the at least one machine status, and performing the at least one resulting action are performed in response to detecting a predetermined event.
10. The method of any preceding clause, wherein the predetermined event is detected by performing condition based monitoring of the at least one machine.
11. The method of any preceding clause, further comprising altering an output of the at least one analytical report to identify the at least one trigger condition in the output.
12. The method of any preceding clause, wherein the at least one analytical report comprises a data quality report that indicates an amount of data samples stored as the historical data relative to an expected amount of data samples during a predetermined period of time, and wherein the at least one trigger condition comprises a threshold value which indicates unacceptable data quality when not satisfied.
13. A system for analyzing reporting data, comprising:
   at least one communication interface;
   at least one memory operable to store instructions; and
   at least one processor in communication with the at least one communication interface and the at least one memory, and operable to execute the instructions to:
      receive data associated with the operation of at least one machine via the at least one communication interface;
      store the data as historical data in the memory;
      define at least one analytical report for identifying at least one machine status of the at least one machine;
      generate an output of the at least one analytical report based on the historical data;
      define at least one trigger condition for identifying an indication of the at least one machine status in the output of the at least one analytical report;
      automatically process the output of the at least one analytical report with respect to the at least one trigger condition;
      automatically identify the indication of the at least one machine status based at least in part on automatically processing the output of the at least one analytical report with respect to the at least one trigger condition; and
      perform at least one resulting action in response to automatically identifying the indication of the at least one machine status.
14. The system of any preceding clause, wherein the at least one resulting action comprises at least one of: an alarm; a control action to a controller associated with the at least one machine; storing data associated with the at least one machine status; or generating at least one additional report based at least in part on the indication of the at least one machine status.
15. The system of any preceding clause, wherein the at least one machine comprises one of: at least one wind turbine; at least one wind turbine farm; at least one fleet of wind turbines; a plurality of wind turbines associated with at least one area; at least one hydroelectric turbine; at least one generator; at least one motor; or at least one solar panel.
16. The system of any preceding clause, wherein the at least one analytical report comprises at least one of: a power curve report; a data coverage report; a fault report; a data quality report; a counter quality report; or a parameter report.
17. The system of any preceding clause, the at least one trigger condition comprises at least one of: a data coverage threshold violation; a fault; a data range violation; a counter reset; a variable range violation; a variable threshold violation; or an unexpected parameter setting.
18. The system of any preceding clause, wherein the at least one processor is further operable to execute the instructions to alter an output of the at least one analytical report to identify the at least one trigger condition in the output.
19. The system of any preceding clause, wherein the at least one analytical report comprises a data quality report that indicates an amount of data samples stored as the historical data relative to an expected amount of data samples during a predetermined period of time, and wherein the at least one trigger condition comprises a threshold value which indicates unacceptable data quality when not satisfied.
20. A system for analyzing reporting data, comprising:
   at least one communication interface;
   at least one memory operable to store instructions; and
   at least one processor in communication with the at least one communication interface and the at least one memory, and operable to execute the instructions to:
      extract historical data associated with the operation of at least one machine;
      generate an output of an analytical report based on the historical data;
      automatically identify an indication of at least one machine status by processing the output of the analytical report with respect to at least one trigger condition associated with the indication of the at least one machine status; and
      generate an alarm in response to automatically identifying the indication of the at least one machine status.

## Claims

1. A method for analyzing reporting data, comprising:
receiving (205) data associated with the operation of at least one machine (108);
storing (210) the data as historical data (106);
defining (305) at least one analytical report for identifying at least one machine status of the at least one machine (108);
generating (215) an output of the at least one analytical report based on the historical data (106);
defining (310) at least one trigger condition for identifying an indication of the at least one machine status in the output of the at least one analytical report;
automatically processing (220) the output of the at least one analytical report with respect to the at least one trigger condition;
automatically identifying (225) the indication of the at least one machine status based at least in part on automatically processing the output of the at least one analytical report with respect to the at least one trigger condition; and
performing (230) at least one resulting action in response to automatically identifying the indication of the at least one machine status.

2. The method of claim 1, wherein the at least one resulting action (230) comprises an alarm, and further comprising transmitting (230) the alarm to one of: an operator; or a controller associated with the at least one machine (108).

3. The method of any preceding claim, wherein the at least one resulting action (230) comprises at least one of: an alarm; a control action to a controller associated with the at least one machine (108); storing data associated with the at least one machine status; or generating at least one additional report based at least in part on the indication of the at least one machine status.

4. The method of any preceding claim, wherein the at least one machine (108) comprises one of: at least one wind turbine; at least one wind turbine farm; at least one fleet of wind turbines; a plurality of wind turbines associated with at least one area; at least one hydroelectric turbine; at least one generator; at least one motor; or at least one solar panel.

5. The method of any preceding claim, wherein receiving (205) data associated with operation of at least one machine (108) comprises receiving at least one of: real power production; reactive power production; wind speed; energy subtotal; total energy gathered; generator rotational speed; generator temperature; gearbox temperature; ambient temperature; wind direction; power factor phase voltage and phase current for each phase; production time; vertical wind speed; horizontal wind speed; wind direction; wind temperature; air pressure; a data quality indication; a data coverage indication; a turbine state indication; a turbine component state indication; a fault; or a user action.

6. The method of any preceding claim, wherein defining (305) at least one analytical report comprises defining at least one of: a power curve report; a data coverage report; a fault report; a data quality report; a counter quality report; or a parameter report.

7. The method of any preceding claim, wherein the at least one trigger condition comprises at least one of: a data coverage threshold violation; a fault; a data range violation; a counter reset; a variable range violation; a variable threshold violation; or an unexpected parameter setting.

8. The method of any preceding claim, wherein automatically processing (220) the at least one analytical report, automatically identifying (225) the indication of the at least one machine status, and performing (230) the at least one resulting action are performed periodically at predetermined times.

9. The method of any preceding claim, wherein automatically processing (220) the output of the at least one analytical report, automatically identifying (225) the indication of the at least one machine status, and performing (230) the at least one resulting action are performed in response to detecting a predetermined event.

10. The method of any preceding claim, wherein the predetermined event is detected by performing condition based monitoring of the at least one machine (108).
